# EUROPEAN PATENT APPLICATION

(11) **EP 4 293 770 A1**
(43) Date of publication of application: **20.12.2023**
(21) Application number: 22893269.5
(22) Date of filing: 11.11.2022
(51) Int. Cl.: H01M 10/04, H01M 50/595, H01M 50/586

(54) **METHOD FOR ASSEMBLYING BATTERY ASSEMBLY, BATTERY ASSEMBLY, AND SECONDARY BATTERY COMPRISING SAME**

(30) Priority: 11.11.2021 KR 20210154714
(71) Applicant: LG Energy Solution, Ltd., Seoul 07335 (KR)
(72) Inventor: KIM, Dohyeong, Daejeon 34122 (KR)
(74) Representative: Goddar, Heinz J.
(86) International application number: PCT/KR2022/017754
(87) International publication number: WO 2023/085850

(57) **Abstract**

The present invention relates to a battery assembly in which a negative electrode, a first separator, a positive electrode, and a second separator are stacked and wound, in which the negative electrode included in the battery assembly includes a negative electrode active material portion where a negative electrode active material is stacked on one surface of a negative electrode current collector, and a negative electrode non-coated portion where no negative electrode active material is stacked on one surface of the negative electrode current collector, and in which the negative electrode non-coated portion is wound around an outermost periphery of the battery assembly.

## Description

### [Technical Field]

This application claims priority to and the benefit of Korean Patent Application No. 10-2021-0154714 filed with the Korean Intellectual Property Office on November 11, 2021, the entire contents of which are incorporated herein by reference.

The present invention relates to a battery assembly manufacturing method, a battery assembly, and a secondary battery including the same. Specifically, the present invention relates to a battery assembly manufacturing method, a battery assembly, and a secondary battery including the same that prevent a level difference and prevent a separator from being folded during a process of winding a negative electrode, the separator, and a positive electrode.

### [Background Art]

Depending on shapes of battery casings, secondary batteries are classified into a cylindrical or angular battery in which a battery assembly is embedded in a cylindrical or angular metal can, and a pouch-type battery in which a battery assembly is embedded in a pouch-type casing provided in the form of a laminated aluminum sheet.

In addition, the battery assembly embedded in the battery casing is a power generation element configured to be chargeable and dischargeable and having a stacked structure including a positive electrode, a separator, and a negative electrode. The battery assemblies are classified into a folding-type battery assembly (jelly-roll-type battery assembly) made by winding elongated sheet-type positive and negative electrodes coated with an active material in a state in which a separator is interposed between the positive and negative electrodes, and a stack-type battery assembly made by sequentially stacking a plurality of positive and negative electrodes each having a predetermined size in a state in which separators are interposed between the positive and negative electrodes. Among the battery assemblies, the advantage of the jelly-roll-type battery assembly is that the jelly-roll-type battery assembly is easy to manufacture and has a high energy density per weight.

In the case of the jelly-roll-type battery assembly in the related art, the separator is wound around an outermost periphery of the stacked structure at the time of winding the stacked structure including the positive electrode, the separator, and the negative electrode. In the case of the jelly-roll-type battery assembly in the related art, the separator positioned on the outermost periphery may have a longer length than the positive electrode, the negative electrode, and the separator between the positive and negative electrodes. For this reason, there is a problem in that the positive electrode, the negative electrode, and the separator positioned between the positive and negative electrodes are folded by a centrifugal force applied to wind the separator positioned on the outermost periphery.

Therefore, there is a need for a battery assembly manufacturing method, a battery assembly, and a secondary battery including the same, which are capable of basically solving the above-mentioned problem and thus solving a problem that a component having a short length is folded by a centrifugal force, which is applied to wind the stacked structure including the positive electrode, the separator, and the negative electrode, and by a difference in length between components included in the battery assembly.

### [Detailed Description of the Invention]

### [Technical Problem]

The present invention has been made in an effort to solve the above-mentioned problem in the related art, and an object of the present invention is to provide a battery assembly manufacturing method, a battery assembly, and a secondary battery including the same, which are capable of preventing a distal end of a separator or positive electrode having a short length from being folded at the time of winding a stack including a negative electrode, a separator, and a positive electrode.

### [Technical Solution]

One embodiment of the present invention provides a battery assembly in which a negative electrode, a first separator, a positive electrode, and a second separator are stacked and wound, in which the negative electrode includes: a negative electrode active material portion where a negative electrode active material is stacked on one surface of a negative electrode current collector; and a negative electrode non-coated portion where no negative electrode active material is stacked on one surface of the negative electrode current collector, and in which the negative electrode non-coated portion is wound around an outermost periphery of the battery assembly.

In the embodiment of the present invention, the battery assembly may further include: a first sealing tape attached to a winding end portion of one or more of the negative electrode, the separator, and the positive electrode, in which at least a part of one surface of the first sealing tape is positioned to fix the winding end portion of one or more of the negative electrode, the separator, and the positive electrode.

In the embodiment of the present invention, the battery assembly may further include: a second sealing tape attached to at least one surface of the negative electrode non-coated portion, in which at least a part of one surface of the second sealing tape is positioned to fix the winding end portion of the negative electrode non-coated portion.

Another embodiment of the present invention provides a secondary battery including: the battery assembly; a can opened at one side thereof and configured to mount the battery assembly therein; and a cap assembly coupled to an upper portion of the can. Still another embodiment of the present invention provides a battery assembly manufacturing method including sequentially supplying and winding a negative electrode, a first separator, a positive electrode, and a second separator around a mandrel, in which the negative electrode includes: a negative electrode active material portion where a negative electrode active material is stacked on one surface of a negative electrode current collector; and a negative electrode non-coated portion where no negative electrode active material is stacked on one surface of the negative electrode current collector, and in which the negative electrode non-coated portion is positioned on an outermost periphery.

### [Advantageous Effects]

The battery assembly manufacturing method, the battery assembly, and the secondary battery including the same according to the embodiment of the present invention may prevent the distal end of the separator or positive electrode having a short length from being folded at the time of winding the negative electrode, the separator, and the positive electrode stack, thereby preventing an internal short circuit and contact between the positive and negative electrodes.

### [Brief Description of Drawings]

FIG. 1 is a cross-sectional view illustrating a secondary battery including a battery assembly according to an embodiment of the present invention.
FIG. 2A is a top plan view illustrating the battery assembly according to the embodiment of the present invention, and FIG. 2B is a cross-sectional view illustrating the battery assembly according to the embodiment of the present invention.
FIG. 3 is a top plan view illustrating a stacked structure of the battery assembly according to the embodiment of the present invention.
FIG. 4 is a disassembled top plan view illustrating a state in which a first sealing tape is bonded to the battery assembly according to the embodiment of the present invention.

### [Explanation of Reference Numerals and Symbols]

- 100:: Secondary battery
- 10:: Battery assembly
- 1:: Negative electrode
- 1a:: Negative electrode active material portion
- 1b:: Negative electrode non-coated portion
- 2:: Positive electrode
- 2a:: Positive electrode active material portion
- 2b:: Positive electrode non-coated portion
- 3:: Separator
- 3a:: First separator
- 3b:: Second separator
- 4:: First sealing tape
- 5:: Second sealing tape
- 20:: Can
- 21:: Beading portion
- 22:: Crimping portion
- 30:: Cap assembly
- 31:: Top cap
- 32:: Safety vent
- 33:: Current blocking element
- 40:: Gasket
- 50:: CID gasket

### [Best Mode]

Hereinafter, the present invention will be described in detail with reference to the drawings. However, the drawings are intended to illustratively describe the present invention, and the scope of the present invention is not limited by the drawings.

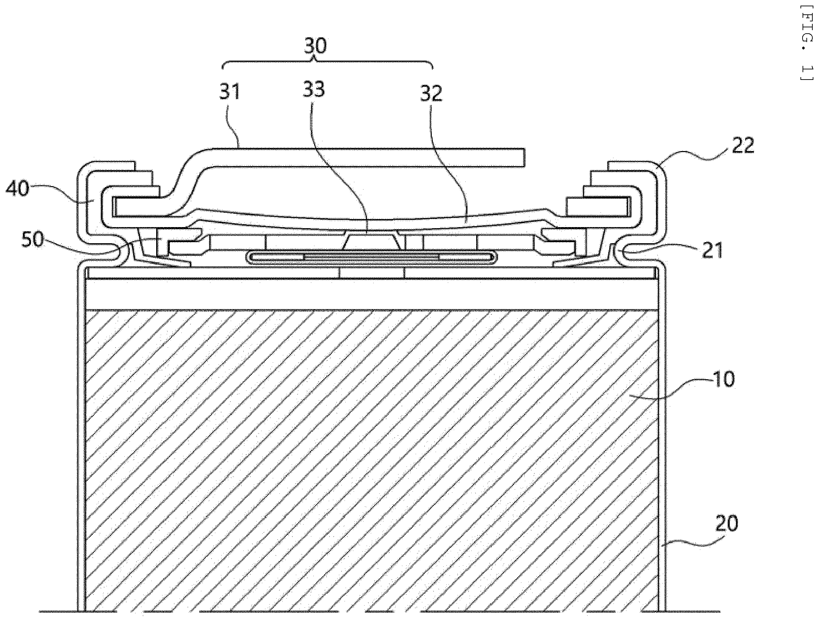

FIG. 1 is a cross-sectional view illustrating a secondary battery 100 including a cap assembly 30 according to an embodiment of the present invention.

The secondary battery 100 according to the present invention may include a battery assembly 10, a can 20, and the cap assembly 30.

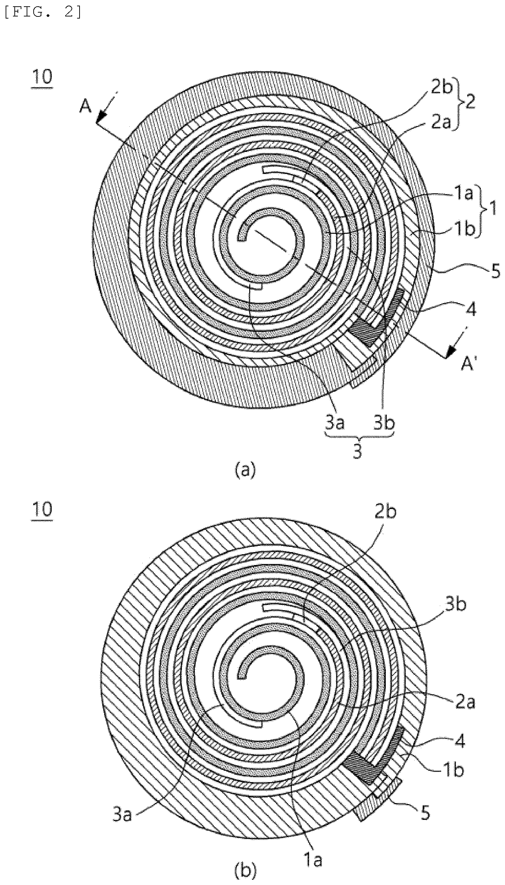

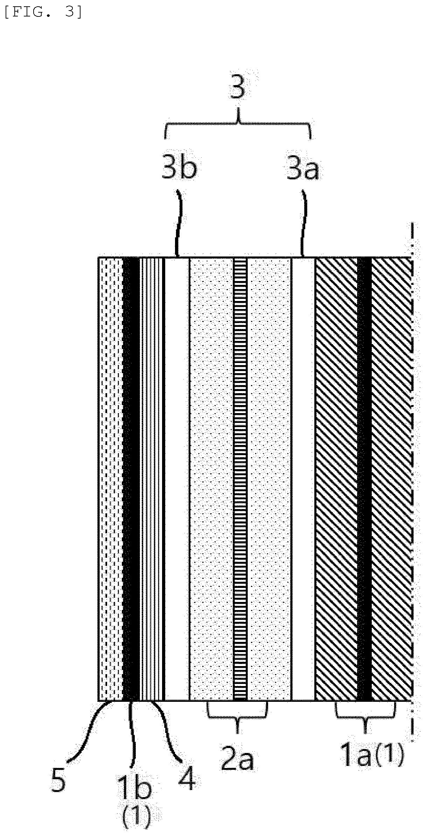

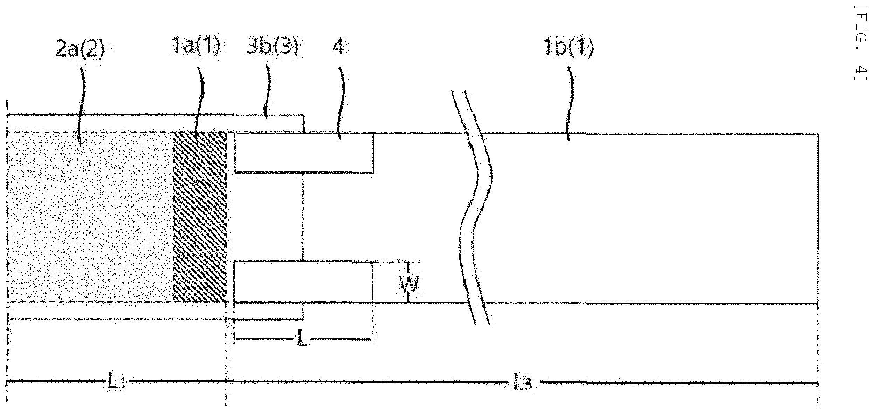

FIG. 2A is a top plan view illustrating the battery assembly 10 according to the embodiment of the present invention, FIG. 2B is a cross-sectional view illustrating the battery assembly 10 according to the embodiment of the present invention, FIG. 3 is a top plan view illustrating a stacked structure of the battery assembly 10 according to the embodiment of the present invention, and FIG. 4 is a disassembled top plan view illustrating a state in which a first sealing tape 4 is bonded to the battery assembly 10 according to the embodiment of the present invention.

The battery assembly 10 is a power generation element configured to be chargeable and dischargeable and having a stacked structure including a positive electrode 2, a separator 3, and a negative electrode 1. The battery assembly 10 may include a jelly-roll-type structure made by winding the elongated sheet-type positive and negative electrodes 2 and 1 coated with an active material in a state in which the separator 3 is interposed between the positive and negative electrodes 2 and 1.

More specifically, the battery assembly 10 is wound in the order of the negative electrode 1, a first separator 3a, the positive electrode 2, and a second separator 3b from a mandrel, and a negative electrode non-coated portion 1b may be wound around an outermost periphery of the battery assembly 10. In this case, the negative electrode non-coated portion 1b may mean a region on one surface of a negative electrode current collector where no negative electrode active material is stacked. Further, a negative electrode active material portion 1a may mean a region on one surface of the negative electrode current collector where the negative electrode active material is stacked. Likewise, the positive electrode 2 may include a positive electrode active material portion 2a that is a region on one surface of a positive electrode current collector where a positive electrode active material is stacked, and a positive electrode non-coated portion 2b that is a region on one surface of the positive electrode current collector where no positive electrode active material is stacked.

Because the negative electrode non-coated portion 1b is positioned on the outermost periphery of the battery assembly 10 according to the present invention, the negative electrode non-coated portion 1b may be in contact with the interior of the can 20. Therefore, the negative electrode non-coated portion 1b may also serve as a negative electrode tab.

The battery assembly 10 according to the present invention may include: a precursor made by winding the negative electrode active material portion 1a, the first separator 3a, the positive electrode 3, and the second separator 3b first; the negative electrode non-coated portion 1b wound around an outermost periphery of the precursor and configured to surround the precursor; and first and second sealing tapes 4 and 5 to be described below. In this case, a length of the negative electrode non-coated portion 1b may be longer than a length of a periphery of the precursor to surround the entire precursor. In case that a radius of the precursor is r, a length of the periphery of the precursor may be 2nr, and a length of the negative electrode non-coated portion 1b may be 2πr or more.

In the embodiment, in the battery assembly 10, the negative electrode non-coated portion 1b may be integrated with the precursor in which the negative electrode 1, the first separator 3a, the positive electrode 2, and the second separator 3b are sequentially wound. In this case, the negative electrode non-coated portion 1b may be in contact with the other surface of the first sealing tape 4 to be described below. In other words, a winding start portion, where the winding of the negative electrode non-coated portion 1b is started, may be in contact with at least a part of the other surface of the first sealing tape 4. A winding end, where the winding of the negative electrode non-coated portion 1b is ended, i.e., a winding end portion may be in contact with the other surface of the first sealing tape 4 or the winding start portion of the negative electrode non-coated portion 1b.

Further, in the negative electrode 1 according to the embodiment, the negative electrode non-coated portion 1b may be positioned on one of or both the winding start portion where the winding of the battery assembly 10 is started and the winding end portion where the winding of the battery assembly 10 is ended. For example, in the negative electrode 1, the negative electrode non-coated portion 1b, the negative electrode active material portion 1a, and the negative electrode non-coated portion 1b may be sequentially disposed. Therefore, l₀=l₁+l₂+l₃ may be implemented when an overall length of the negative electrode current collector is L₀, a length of the negative electrode active material portion 1a is l₁, and lengths of the negative electrode non-coated portions 1b positioned at front and rear ends of the negative electrode 1 are l₂ and l₃, respectively. That is, the length negative electrode current collector may be longer than a length of the negative electrode active material portion 1a.

In another embodiment, in the battery assembly 10, the negative electrode non-coated portion 1b may be separated from the precursor in which the negative electrode 1, the first separator 3a, the positive electrode 2, and the second separator 3b are sequentially wound.

The battery assembly 10 may further include the first sealing tape 4. The first sealing tape 4 may be attached to a winding end portion of the negative electrode 1, the separator 3, or the positive electrode 2. In this case, the winding end portion may mean an end or end surface of the negative electrode 1, the positive electrode 2, or the separator 3 that is completely wound.

That is, at least a part of one surface of the first sealing tape 4 may face the winding end portion of the negative electrode 1, the positive electrode 2, or the separator 3, and the other surface of the first sealing tape 4 may face the negative electrode non-coated portion 1b. In other words, at least a part of one surface of the first sealing tape 4 may be in contact with the winding end portion of the negative electrode 1, the positive electrode 2, or the separator 3.

The battery assembly 10 may include one or more first sealing tapes 4. Further, in case that the battery assembly 10 includes a plurality of first sealing tapes 4, the first sealing tapes 4 may be positioned to be spaced apart from one another at predetermined distances in a direction perpendicular to a direction in which the negative electrode 1, the first separator 3a, the positive electrode 2, and the second separator 3b are wound. Further, in the present specification, the term "one or more components" may include one component or include the plurality of components, i.e., two or more components.

For example, in case that the battery assembly 10 includes a pair of first sealing tapes 4, i.e., two first sealing tapes 4, the first sealing tapes 4 may be attached to two opposite ends of the winding end portion of the negative electrode 1, the positive electrode 2, or the separator 3 based on a width direction of the negative electrode 1, the positive electrode 2, or the separator 3. In this case, the width direction of the negative electrode 1, the positive electrode 2, or the separator 3 may mean a direction perpendicular to the direction in which the negative electrode 1, the positive electrode 2, or the separator 3 is wound.

The first sealing tape 4 fixes the winding end portion of the negative electrode 1, the positive electrode 2, or the separator 3 that is completely wound, which makes it possible to prevent the negative electrode 1, the positive electrode 2, or the separator 3 from being folded by a centrifugal force applied to the precursor when the negative electrode non-coated portion 1b is additionally wound, thereby preventing the negative and positive electrodes 1 and 2 from coming into contact with each other. Therefore, it is possible to prevent a short circuit from occurring in the battery assembly 10.

The size of the first sealing tape 4 is not limited as long as the first sealing tape 4 may fix the winding end portion of the negative electrode 1, the positive electrode 2, or the separator 3. For example, a length L of a long axis of the first sealing tape 4 may be 5 mm to 50 mm, and a length W of a short axis of the first sealing tape 4 may be 0.1 mm to 30 mm, and a thickness of the first sealing tape 4 may be 0.1 um to 80 um. Particularly, the length L of the long axis of the first sealing tape 4 may be 10 mm to 30 mm, the length W of the short axis of the first sealing tape 4 may be 1 mm to 15 mm, and the thickness of the first sealing tape 4 may be 1 um to 50 um.

In the present specification, the length of the long axis of the component may mean a length in the direction in which the battery assembly 10 and the first and second sealing tapes 4 and 5 are wound, and the length of the short axis may mean a length in the direction perpendicular to the length of the long axis, i.e., a height of the battery assembly 10 or the secondary battery 100.

The battery assembly 10 may further include the second sealing tape 5. The second sealing tape 5 may be attached to at least one surface of the negative electrode non-coated portion 1b. That is, the second sealing tape 5 may fix the negative electrode non-coated portion 1b. At least a part of one surface of the second sealing tape 5 may be in contact with the winding end portion of the negative electrode non-coated portion 1b.

The negative electrode non-coated portion 1b positioned on the outermost periphery of the battery assembly 10 of the present invention is in contact with an inner surface of the can 20, such that a width of the second sealing tape 5 or a length of a short axis of the second sealing tape 5 may be shorter than the height of the battery assembly 10. The size of the second sealing tape 5 is not limited as long as the second sealing tape 5 may fix the winding end portion of the negative electrode non-coated portion 1b. For example, a length W of the short axis of the second sealing tape 5 may be 0.1 mm to 30 mm, and a thickness of the second sealing tape 5 may be 0.1 um to 80 um. Particularly, the length W of the short axis of the second sealing tape 5 may be 1 mm to 15 mm, and the thickness of the second sealing tape 5 may be 1 um to 50 um.

The length L of the long axis of the second sealing tape 5 may correspond to the length of the long axis of the negative electrode non-coated portion 1b. That is, an end surface of the second sealing tape 5, where the winding of the second sealing tape 5 is started, may be in contact with an end surface of the second sealing tape 5 in the region where the winding of the second sealing tape 5 is ended.

The region where the winding of the second sealing tape 5 is started may overlap the region where the winding of the second sealing tape 5 is ended. That is, a predetermined region defined in a winding direction from the winding start end of the second sealing tape 5 may overlap a predetermined region in a direction opposite to the winding direction at the winding end portion. Therefore, the second sealing tape 5 may be stacked twice on an outer surface of the winding end portion of the negative electrode 1, the positive electrode 2, or the separator 3.

When a radius of a wound structure made by winding the negative electrode non-coated portion 1b around the outermost periphery of the precursor is R, a length of a periphery of the wound structure may be 2nR. Therefore, the length of the long axis of the second sealing tape 5, i.e., the length of the second sealing tape 5 may be equal to or longer than 2πR.

One or more second sealing tapes 5 may be included. In the embodiment, in case that two second sealing tapes 5 are included, the two second sealing tapes 5 may be positioned to be spaced apart from each other at a predetermined distance. For example, the second sealing tapes 5 may be positioned to be spaced apart from each other in a height direction of the battery assembly 10.

In another embodiment, a single second sealing tape 5 may be included. The second sealing tape 5 may be positioned at a 2/10 to 8/10 point in the width direction of the battery assembly 10 or the wound negative electrode non-coated portion 1b.

The first and second sealing tapes 4 and 5 may each include a conductive adhesive tape. The first and second sealing tapes 4 and 5 may each be made by applying an adhesive material onto one surface of a substrate or stacking a bonding layer (not illustrated) thereon. The first and second sealing tapes 4 and 5 may each be provided as a film containing one or more of polyethylene terephthalate (PET), polyphenylene sulfide, polyimide, and polypropylene. Further, the adhesive material or bonding layer may contain an acrylic bonding agent.

The secondary battery 100 according to the present invention may have first and second insulating plates (not illustrated) respectively positioned on upper and lower portions of the battery assembly 10. The first insulating plate may insulate a portion between the battery assembly 10 and the cap assembly 30, and the second insulating plate may insulate a portion between the battery assembly 10 and a lower portion of the can 20.

Further, the battery assembly 10 may further include a center pin (not illustrated) provided at a center of the battery assembly 10. The center pin may prevent the battery assembly 10 wound in the jelly-roll shape from being loosened, and the center pin may serve as a movement passage for gas in the secondary battery 100.

The can 20 may have a column structure having a space therein. The internal space of the can 20 may accommodate an electrolyte (not illustrated) and the battery assembly 10 including the electrode and the separator. The can 20 may have one side having an opened structure, and the other side having a sealed structure. In this case, one side and the other side of the can 20 may mean ends positioned on the upper and lower portions in the gravitational direction or along the central axis of the can 20.

A beading portion 21 may be provided at one opened side of the can 20 and folded in a direction toward a center of the secondary battery 100. Further, the can 20 may have a crimping portion 22 provided above the beading portion 21. That is, the crimping portion 22 may be positioned at an uppermost side of the can 20.

The can 20 may be made of a lightweight conductive metallic material such as aluminum or aluminum alloy.

The cap assembly 30 may be coupled to an upper portion of the can 20 and include a top cap 31, a safety vent 32, and a current blocking element 33.

The top cap 31 may protrude from an uppermost portion of the cap assembly 30 and serve as an electrode terminal electrically connected to an external component. The top cap 31 may be coupled to the upper portion of the can 20. That is, the top cap 31 may be coupled to the crimping portion 22 positioned on an uppermost portion of the can 20.

The secondary battery 100 according to the present invention may include a gasket 40 between the crimping portion 22 and the top cap 31. The gasket 40 may increase sealability of the can 20.

The safety vent 32 may be positioned below the top cap 31 and coupled to an end of the top cap 31. The safety vent 32 is in contact with an end of the top cap 31 by a predetermined length, and a portion, except for a contact length, may be positioned to be spaced apart from the top cap 31 at a predetermined distance. More specifically, a spacing distance between the safety vent 32 and the top cap 31 may increase in a direction toward the center from the end being in contact with the top cap 31. In this case, the end may mean a position corresponding to a position of the crimping portion 22 or the gasket 40.

In the embodiment, the end of the safety vent 32 may be provided in the direction perpendicular to the axial direction of the can 20. In this case, like the safety vent 32, the top cap 31 may be provided in the direction perpendicular to the axial direction of the can 20. That is, the safety vent 32 and the top cap 31 may be provided in parallel with each other.

In another embodiment, the end of the safety vent 32 is bent, such that the safety vent 32 may surround an outer peripheral surface of the top cap 32.

The safety vent 32 may be bent one or more times. For example, two notches may be provided on a portion of the safety vent 32 that is not in contact with the top cap 31. That is, the safety vent 32 may be bent by a notch, and a center of the safety vent 32 may be recessed to define a recessed central portion (not illustrated). Further, the safety vent 32 may have a venting portion (not illustrated) that connects the recessed central portion and the end (not illustrated) being in contact with the top cap 31.

The current blocking element 33 may be positioned below the safety vent 32 and be at least partially in contact with the safety vent 32.

The current blocking element 33 may include a central portion (not illustrated) protruding in a direction toward the safety vent 32, and a CID filter portion (not illustrated) positioned outside the central portion. Therefore, a central portion of the current blocking element 33 of the cap assembly 30 may be in contact with the recessed central portion of the safety vent 32.

The cap assembly 30 according to the present invention may have a CID gasket 50 provided at an end of the CID filter portion. The CID gasket 50 may prevent the safety vent 32 from being in contact with a portion except for the central portion of the current blocking element 33.

A battery assembly manufacturing method may include step S10 of sequentially supplying and winding the negative electrode, the first separator, the positive electrode, and the second separator around the mandrel.

Step S10 of winding the negative electrode, the first separator, the positive electrode, and the second separator may include winding the precursor, which is made by sequentially stacking the negative electrode, the first separator, the positive electrode, and the second separator each having a sheet shape, in a jelly-roll shape.

In the embodiment, step S10 of winding the negative electrode, the first separator, the positive electrode, and the second separator may include: fixing the negative electrode to the mandrel and rotating the mandrel; supplying the first separator; supplying the positive electrode; and supplying the second separator.

In another embodiment, step S10 of winding the negative electrode, the first separator, the positive electrode, and the second separator may include winding the precursor, which is made by sequentially stacking the negative electrode, the first separator, the positive electrode, and the second separator, around the mandrel.

In still another embodiment, step S10 of winding the negative electrode, the first separator, the positive electrode, and the second separator may include forming the jelly-roll-type structure by sequentially winding the stacks, which are each made by sequentially stacking the negative electrode, the first separator, the positive electrode, and the second separator, around the mandrel. That is, step S10 of winding the negative electrode, the first separator, the positive electrode, and the second separator may include: fixing the negative electrode to the mandrel and rotating the mandrel; and inputting the stack so that the stack rotates together with the negative electrode after the negative electrode begins to rotate.

Step S20 of winding the negative electrode non-coated portion around the outermost periphery may include winding the negative electrode non-coated portion around the outermost periphery of the jelly-roll-type structure in which the negative electrode, the first separator, the positive electrode, and the second separator are sequentially wound. The negative electrode according to the present invention may include the negative electrode active material portion on which the negative electrode active material is stacked on one surface of the negative electrode current collector, and the negative electrode non-coated portion on which no negative electrode active material is stacked. In step S20 of winding the negative electrode non-coated portion around the outermost periphery, the negative electrode non-coated portion is positioned at the end portion where the winding of the negative electrode active material portion is ended, and the negative electrode non-coated portion is continuously wound after the negative electrode active material portion is wound, such that the negative electrode non-coated portion may be wound around the outermost periphery of the battery assembly.

In the embodiment, the negative electrode included in the battery assembly may include the negative electrode active material portion and the negative electrode non-coated portion. The negative electrode non-coated portion, the negative electrode active material portion, and the negative electrode non-coated portion may be sequentially positioned from the winding start region of the negative electrode, or the negative electrode active material portion and the negative electrode non-coated portion may be sequentially positioned. That is, at least the negative electrode non-coated portion of the negative electrode may be positioned at the winding end portion of the negative electrode active material.

Therefore, in step S20 of winding the negative electrode non-coated portion around the outermost periphery, the negative electrode, the first separator, the positive electrode, and the second separator are wound, and the negative electrode non-coated portion may be wound from the winding end portions of the first separator, the positive electrode, and the second separator after the first separator, the positive electrode, and the second separator are wound. That is, step S10 of winding the negative electrode, the first separator, the positive electrode, and the second separator may also serve as step S20 of winding the negative electrode non-coated portion around the outermost periphery according to yet another embodiment.

Step S20 of winding the negative electrode non-coated portion around the outermost periphery according to another embodiment may include additionally winding the negative electrode non-coated portion around the precursor in which the negative electrode, the first separator, the positive electrode, and the second separator are sequentially wound. Therefore, step S20 of winding the negative electrode non-coated portion around the outermost periphery may include inputting the negative electrode non-coated portion before the winding of the precursor, in which the negative electrode, the first separator, the positive electrode, and the second separator are sequentially stacked, is ended.

In still yet another embodiment, in step S20 of winding the negative electrode non-coated portion around the outermost periphery, the negative electrode non-coated portion is connected to a distal end of the negative electrode of the precursor in which the negative electrode, the first separator, the positive electrode, and the second separator are sequentially wound, and the negative electrode non-coated portion may be wound around the outermost periphery of the precursor. Therefore, step S20 of winding the negative electrode non-coated portion around the outermost periphery may include bringing the negative electrode non-coated portion into contact with the negative electrode winding end portion.

The battery assembly manufacturing method according to the present invention may further include step S30 of attaching the first sealing tape to the winding end portion of the precursor. Step S30 of attaching the first sealing tape may include inputting the first sealing tape to the winding end of the precursor in which the negative electrode, the first separator, the positive electrode, and the second separator are sequentially stacked.

The battery assembly manufacturing method according to the present invention may further include step S40 of attaching the second sealing tape to the winding end portion of the negative electrode non-coated portion and winding the second sealing tape. Step S40 of attaching and winding the second sealing tape may include inputting the second sealing tape to the winding end of the negative electrode non-coated portion.

While the present invention has been described above with reference to the exemplary embodiments, it may be understood by those skilled in the art that the present invention may be variously modified and changed without departing from the spirit and scope of the present invention disclosed in the claims.

## Claims

1. A battery assembly in which a negative electrode, a first separator, a positive electrode, and a second separator are stacked and wound,
wherein the negative electrode comprises:
a negative electrode active material portion where a negative electrode active material is stacked on one surface of a negative electrode current collector; and
a negative electrode non-coated portion where no negative electrode active material is stacked on one surface of the negative electrode current collector, and
wherein the negative electrode non-coated portion is wound around an outermost periphery of the battery assembly.

2. The battery assembly of claim 1, further comprising:
a first sealing tape attached to a winding end portion of one or more of the negative electrode, the first separator, the positive electrode, and the second separator,
wherein at least a part of one surface of the first sealing tape is positioned to fix the winding end portion of one or more of the negative electrode, the first separator, the positive electrode, and the second separator.

3. The battery assembly of claim 1, further comprising:
a second sealing tape attached to at least one surface of the negative electrode non-coated portion,
wherein at least a part of one surface of the second sealing tape is positioned to fix the winding end portion of the negative electrode non-coated portion.

4. The battery assembly of claim 3, wherein the second sealing tape is included one or more, and the second sealing tapes are positioned to be spaced apart from one another at predetermined distances in a direction perpendicular to a direction in which the negative electrode non-coated portion is wound.

5. The battery assembly of claim 2, wherein the first sealing tape is included one or more, and the first sealing tapes are positioned to be spaced apart from one another at predetermined distances in a direction perpendicular to a direction in which the negative electrode, the first separator, the positive electrode, and the second separator are wound.

6. The battery assembly of claim 2, wherein a length of a long axis of the first sealing tape is 10 mm to 30 mm.

7. The battery assembly of claim 1, wherein the negative electrode non-coated portion is positioned on one of or both a winding start portion where the winding of the negative electrode is started and a winding end portion where the winding of the negative electrode is ended.

8. A secondary battery comprising:
the battery assembly according to any one of claims 1 to 7;
a can opened at one side thereof and configured to mount the battery assembly therein; and
a cap assembly coupled to an upper portion of the can.

9. A battery assembly manufacturing method comprising sequentially supplying and winding a negative electrode, a first separator, a positive electrode, and a second separator around a mandrel,
wherein the negative electrode comprises:
a negative electrode active material portion where a negative electrode active material is stacked on one surface of a negative electrode current collector; and
a negative electrode non-coated portion where no negative electrode active material is stacked on one surface of the negative electrode current collector, and
wherein the negative electrode non-coated portion is positioned on an outermost periphery.

10. The battery assembly manufacturing method of claim 9, further comprising:
supplying and attaching a first sealing tape to winding end portions of the negative electrode, the first separator, the positive electrode, and the second separator.

11. The battery assembly manufacturing method of claim 9, further comprising:
supplying and attaching a second sealing tape to a winding end portion of the negative electrode non-coated portion and winding the second sealing tape.
